# EUROPEAN PATENT SPECIFICATION

(11) **EP 3 535 724 B1**
(45) Date of publication and mention of the grant of the patent: **13.08.2025**
(21) Application number: 17805263.5
(22) Date of filing: 01.11.2017
(51) Int. Cl.: G06Q 20/32, G06Q 20/40, G06Q 30/06, G06Q 40/00

(54) **VERIFYING AN ASSOCIATION BETWEEN A COMMUNICATION DEVICE AND A USER**
ÜBERPRÜFUNG EINER VERBINDUNG ZWISCHEN EINER KOMMUNIKATIONSVORRICHTUNG UND EINEM BENUTZER
VÉRIFICATION D'UNE ASSOCIATION ENTRE UN DISPOSITIF DE COMMUNICATION ET UN UTILISATEUR

(30) Priority: 01.11.2016 ZA 201607517
(43) Date of publication of application: 11.09.2019
(73) Proprietor: Entersekt International Limited, Ebene (MU)
(72) Inventor: OOSTHUIZEN, Gerhard Gysbert, 7530 Cape Town (ZA)
(74) Representative: Gill Jennings & Every LLP
(86) International application number: PCT/IB2017/056788
(87) International publication number: WO 2018/083604

(56) References cited:
- WO-A1-2016/061118
- WO-A2-03/073389
- US-A1- 2014 114 857
- US-A1- 2015 356 560
- US-B2- 8 001 615
- BREEDEN JOHN: "Can derived credentials turn a phone into an ID manager? -- GCN", 14 February 2014 (2014-02-14), pages 1 - 4, XP055794691, Retrieved from the Internet <URL:https://gcn.com/Articles/2014/02/14/bring-your-own-identity.aspx?m=1> [retrieved on 20210413]

## Description

### CROSS-REFERENCE TO RELATED APPLICATIONS

This application claims priority from South African provisional patent application number 2016/07517 filed on 1 November 2016.

### FIELD OF THE INVENTION

This invention relates to a system and a method for verifying an association between a communication device and a user.

### BACKGROUND TO THE INVENTION

Using communication devices such as mobile phones to perform banking and other financial operations is becoming increasingly popular. For example, users may use communication devices having an appropriate application executing thereon to make payments, conduct balance enquiries and the like.

Prior to making use of such applications, users will typically need to download and install the application onto their communication device and thereafter enrol the application with the relevant service provider. An exemplary service provider may be a bank offering an application for use in transacting against a financial account.

During enrolment, a one-to-one relationship between the communication device (or the application executing thereon) and the service provider may be established such that the service provider may be able to uniquely identify the communication device (or application), for example, during interactions with the service provider over a communication network (such as the Internet).

However, before being permitted to transact, the communication device, or in some instances a particular application executing on the communication device, may need to be linked to a user's account held at the service provider. This may require the service provider to verify that the communication device belongs to (or is otherwise associated with) the user against whose account the application will be able to transact. Typically, a mobile station international subscriber directory number (MSISDN) on record may be validated as linked to an application which is running on the communication device. Additionally, a list of knowledge questions, including optionally a user-name and PIN combination can be captured to ensure that the user intends to link the communication device to their account. In other cases, the user may physically visit the service provider (or a branch thereof) such that the association between the communication device and the user can be verified. Once the association between the communication device and the user has been verified, the service provider may link the communication device with the account of the user, knowing with a high degree of certainty that the communication device is in fact that of the user, and not of a fraudster.

While enrolment processes such as the above may enable a service provider to uniquely identify requests or messages received from a specific communication device and to uniquely associate these requests or messages with a user account, the process can be cumbersome, time consuming or otherwise inconvenient for users and service providers alike. An ideal strong registration may entail combining 'something you have' (e.g. ATM Card, ID or Password) and 'something you know'.

WO03073389A2 describes an authentication arrangement for use in a network payment system for transacting a sale of merchandise over a network using an Integrated Circuit Card. The arrangement comprising: a merchant server in communication with the network, the merchant server having at least a first item of merchandise for sale to a client terminal in communication with the network. The client terminal is having an output device for reviewing the first item for sale, and an input device for initiating a purchase transaction to purchase the first item for sale. The client terminal is arranged to build a purchase message using information relating to a merchant identifier and financial transaction information obtained from the merchant server. The arrangement further comprising a card reader for communicating with the Integrated Circuit Card. The client terminal is having means to generate a challenge message and means for receiving the challenge message at the card reader, which then generates a value from the challenge message. The Integrated Circuit Card is having means for generating a cryptographic message from at least a part of the value, while the card reader is having means to generate an authentication token from at least a part of the cryptographic message. The client terminal is also having means for transmitting at least part of the authentication token in a message for transmission via the network.

There is accordingly a need for a solution which alleviates these and/or other problems, at least to some extent.

The preceding discussion of the background to the invention is intended only to facilitate an understanding of the present invention. It should be appreciated that the discussion is not an acknowledgment or admission that any of the material referred to was part of the common general knowledge in the art as at the priority date of the application.

### SUMMARY OF THE INVENTION

Claims 1, 10 disclose the present invention. Preferred embodiments are disclosed in claims 2-9.

In one example, there is provided a computer-implemented method for verifying an association between a communication device and a user, the method conducted at a remote server comprising: receiving a token from a communication device via a secure communication channel by way of which the communication device is uniquely identifiable by the remote server, at least a portion of the token including or having been derived from a credential stored within a portable credential device of the user, the credential having previously been associated with the user in a user account; validating the received token; and, if the token is valid, verifying the association between the communication device and the user.

A further feature provides for the communication device to execute an application and for the method to verify the association between the application and the user.

Still further features provide for at least a portion of the token to include the credential stored within the portable credential device, and for validating the received token to include comparing the received credential against a credential associated with the user account.

The user account may be a user financial account against which the user may conduct financial transactions, and the credential may include payment credentials usable in conducting financial transactions against the user financial account.

A further feature provides for the method to include transmitting a verification message to the communication device, the verification message indicating verification of the association between the communication device and the user.

Yet further features provide for the portable credential device to be a smart card; and, for the portable credential device to be a proximity communication enabled smart card.

An even further feature provides for the method to include transmitting an association verification request requesting verification of an association between the communication device and the user.

Further features provide for the association verification request to include a set of data elements, for at least a portion of the token to have been derived by performing an operation on the data elements and the credential, and for the operation to be one of a hash of the data elements and the credential or a signing or encryption of the data elements using the credential.

An even further feature provides for validating the received token to include validating that the token includes or was derived from a credential having previously been associated with the user in the user account.

Further features provide for the method to include enrolling the application with the remote server. In one embodiment, at least a portion of the token includes the credential stored within the portable credential device the token may include the credential and enrolling the application may include: using the credential to identify the user account; and, if the token is valid, storing the device identifier as a verified device identifier in association with the user account. In another embodiment, enrolling the application may include: receiving, from the communication device, a device identifier and a user identifier for association with each other, the user identifier having previously been associated with the user account; identifying the user account using the user identifier; and, if the token is valid, storing the device identifier as a verified device identifier in association with one or both of the user identifier and the user account.

A still further feature provides for storing the device identifier to include combining the device identifier with the token and validating that the communication device is linked to a known mobile station international subscriber directory number (MSISDN).

A yet further feature provides for the secure communication channel to binds the token to the communication device and protect the token from interception and replay.

In another example, there is provided a computer-implemented method for verifying an association between a communication device and a user, the method conducted at the communication device comprising: obtaining a token at least a portion of which includes or is derived from a credential stored within a portable credential device of the user, the credential having previously been associated with the user in a user account; and, transmitting the token to a remote server via a secure communication channel by way of which the communication device is uniquely identifiable by the remote server, for verification, at the remote server, of the association between the communication device and the user.

A further feature provides for the communication device to execute an application and for the method to verify the association between the application and the user.

The user account may be a user financial account against which the user may conduct financial transactions; and the credential may include payment credentials usable in conducting financial transactions against the user financial account.

The token may be obtained responsive to an application installed on the communication device being invoked for the first time or responsive to receiving an association verification request requesting verification of an association between the communication device and the user.

A further feature provides for the method to include receiving a verification message from the remote server, the verification message indicating verification, at the remote server, of the association between the communication device and the user.

A still further feature provides for the communication device to execute an application, and for the method to include enrolling the application with the remote server, which includes: obtaining a device identifier capable of uniquely identifying the communication device; receiving a user identifier input into the communication device via a user interface, the user identifier having previously been associated with the user account; and, transmitting the device identifier and user identifier to the remote server for association with each other thereat.

Yet further features provide for obtaining a token to include interacting with the portable credential device via a proximity communication interface; and, for the proximity communication interface to be a radio frequency proximity communication interface.

An even further feature provides for at least a portion of the token to include the credential stored within the portable credential device, and for obtaining a token to include obtaining the credential from the portable credential device.

A still further feature provides for the method to include: receiving an association verification request requesting verification of an association between the communication device and the user; and, prompting the user to verify the association using the portable credential device.

Yet further features provide for the association verification request to include a set of data elements, for at least a portion of the token to be derived from the credential and obtaining a token to include performing an operation on the data elements and the credential to generate the token, and for the operation to be one of a hash of the data elements and the credential or a signing or encryption of the data elements using the credential.

A further feature provides for the operation to be performed on the portable credential device and for the method to include forwarding the data elements to the portable credential device and receiving the token from the portable credential device. Alternatively for the operation to be performed on the communication device and for the method to include obtaining the credential from the portable credential device and performing the operation on the data elements and the credential to generate the token.

In another example, there is provided a system for verifying an association between a communication device and a user, the system including a remote server having a memory for storing computer-readable program code and a processor for executing the computer-readable program code, the remote server comprising: a token receiving component for receiving a token from a communication device via a secure communication channel by way of which the communication device is uniquely identifiable by the remote server, the at least a portion of the token including or having been derived from a credential stored within a portable credential device of the user, the credential having previously been associated with the user in a user account; a validating component for validating the received token; and, a verification component for, if the token is valid, verifying the association between the communication device and the user.

A further feature provides for the communication device to execute an application and for the method to verify the association between the application and the user.

A still further feature provides for at least a portion of the token to include the credential stored within the portable credential device, for obtaining the token to include obtaining the credential from the portable credential device, and for validating the received token to include comparing the received credential against a credential associated with the user account.

The user account may be a user financial account against which the user may conduct financial transactions; and the credential may include payment credentials usable in conducting financial transactions against the user financial account.

A further feature provides for the remote server to include a verification message transmitting component for transmitting a verification message to the communication device, the verification message indicating verification of the association between the communication device and the user.

Still further features provide for the remote server to include an enrolling component for enrolling the application with the remote server; for the enrolling component to include: an identifier receiving component for receiving, from the communication device, a device identifier and a user identifier for association with each other, the user identifier having previously been associated with the user account; an identifying component for identifying the user account using the user identifier; and, a storing component for, if the token is valid, storing the device identifier as a verified device identifier in association with one or both of the user identifier and the user account.

A further feature provides for storing the device identifier to include combining the device identifier with the token and validating that the communication device is linked to a known mobile station international subscriber directory number (MSISDN).

Yet further features provide for the portable credential device to be a smart card; and, for the portable credential device to be a proximity communication enabled smart card.

An even further feature provides for the remote server to include a request transmitting component for transmitting an association verification request requesting the user to verify an association between the communication device and the user.

Further features provide for the association verification request to include a set of data elements, for receiving a token from the communication device to include receiving a token at least a portion of which having been derived by performing an operation on the data elements and the credential, and for the operation to be one of a hash of the data elements and the credential or a signing or encryption of the data elements using the credential.

In accordance with another example, there is provided a system for verifying an association between a communication device and a user, the system including a communication device having a memory for storing computer-readable program code and a processor for executing the computer-readable program code, the communication device comprising: a token obtaining component for obtaining a token at least a portion of which includes or is derived from a credential stored within a portable credential device of the user, the credential having previously been associated with the user in a user account; and, a token transmitting component for transmitting the token to a remote server via a secure communication channel by way of which the communication device is uniquely identifiable by the remote server, for verification, at the remote server, of the association between the communication device and the user.

A further feature provides for the communication device to execute an application and for the method to verify the association between the application and the user.

The user account may be a user financial account against which the user may conduct financial transactions; and the credential may include payment credentials usable in conducting financial transactions against the user financial account.

A further feature provides for the communication device to include a verification message receiving component for receiving a verification message from the remote server, the verification message indicating verification, at the remote server, of the association between the communication device and the user.

Still further features provide for the communication device to execute an application, for the communication device to include an enrolling component for enrolling the application with the remote server; for the enrolling component to include: a device identifier obtaining component for obtaining a device identifier capable of uniquely identifying the communication device; a user identifier receiving component for receiving a user identifier input into the communication device via a user interface, the user identifier having previously been associated with the user account; and, an identifier transmitting component for transmitting the device identifier and user identifier to the remote server for association with each other thereat.

Yet further features provide for the portable credential device to be a smart card; and, for the portable credential device to be a proximity communication enabled smart card.

Further features provide for the token obtaining component to interact with the portable credential device via a proximity communication interface; and, for the proximity communication interface to be a radio frequency proximity communication interface.

An even further feature provides for at least a portion of the token to include the credential stored within the portable credential device, and for the token obtaining component to obtain the credential from the portable credential device.

A still further feature provides for the communication device to include: a request receiving component for receiving an association verification request requesting verification of an association between the communication device and the user; and a prompting component for prompting the user to verify the association using the portable credential device.

Further features provide for the association verification request to include a set of data elements, for the token obtaining component to perform an operation on the data elements and the credential to generate the token, and for the operation to be one of a hash of the data elements and the credential or a signing or encryption of the data elements using the credential.

A further feature provides for the operation to be performed on the portable credential device and for the token obtaining component to forward the data elements to the portable credential device and receive the token from the portable credential device. Alternatively for the operation to be performed on the communication device and for the token obtaining component to obtain the credential from the portable credential device and perform the operation on the data elements and the credential to generate the token.

In accordance with another example, there is provided a computer program product for verifying an association between a communication device and a user, the computer program product comprising a computer-readable medium having stored computer-readable program code for performing the steps of: receiving a token from a communication device via a secure communication channel by way of which the communication device is uniquely identifiable by the remote server, the at least a portion of the token including or having been derived from a credential stored within a portable credential device of the user, the credential having previously been associated with the user in a user account; validating the received token; and, if the token is valid, verifying the association between the communication device and the user.

In accordance with one more example, there is provided a computer program product for verifying an association between a communication device and a user, the computer program product comprising a computer-readable medium having stored computer-readable program code for performing the steps of: obtaining a token at least a portion of which includes or is derived from a credential stored within a portable credential device of the user, the credential having previously been associated with the user in a user account; and, transmitting the token to a remote server via a secure communication channel by way of which the communication device is uniquely identifiable by the remote server, for verification, at the remote server, of the association between the communication device and the user.

Further features provide for the computer-readable medium to be a non-transitory computer-readable medium and for the computer-readable program code to be executable by a processing circuit.

Embodiments of the invention will now be described, by way of example only, with reference to the accompanying drawings.

### BRIEF DESCRIPTION OF THE DRAWINGS

In the drawings:
- Figure 1: is a schematic diagram which illustrates an exemplary system for verifying an association between a communication device and a user;
- Figure 2: is a swim-lane flow diagram which illustrates an exemplary method for verifying an association between a communication device and a user, for example, during enrolment;
- Figure 3: is a swim-lane flow diagram which illustrates an exemplary method for verifying an association between a communication device and a user, for example, during a transaction;
- Figure 4: is a block diagram which illustrates components of an exemplary system for verifying an association between a communication device and a user; and
- Figure 5: illustrates an example of a computing device in which various aspects of the disclosure may be implemented.

### DETAILED DESCRIPTION WITH REFERENCE TO THE DRAWINGS

The systems and methods described herein enable verification of an association between a communication device and a user. In some implementations this may include verifying an association between a specific software application, executing on the communication device, and the user. The verification may be achieved without the user needing to physically visit a service provider and may provide increased confidence or certainty in establishing a verified association. Verification of the association confirms or establishes with a high degree of certainty that a particular communication device (or in some implementations a specific application resident thereon) is under the legitimate or authorized control or possession of a particular user. The communication device (or application) and user may therefore be linked such that communications originating from the communication device (or application) may be regarded as having originated from the user.

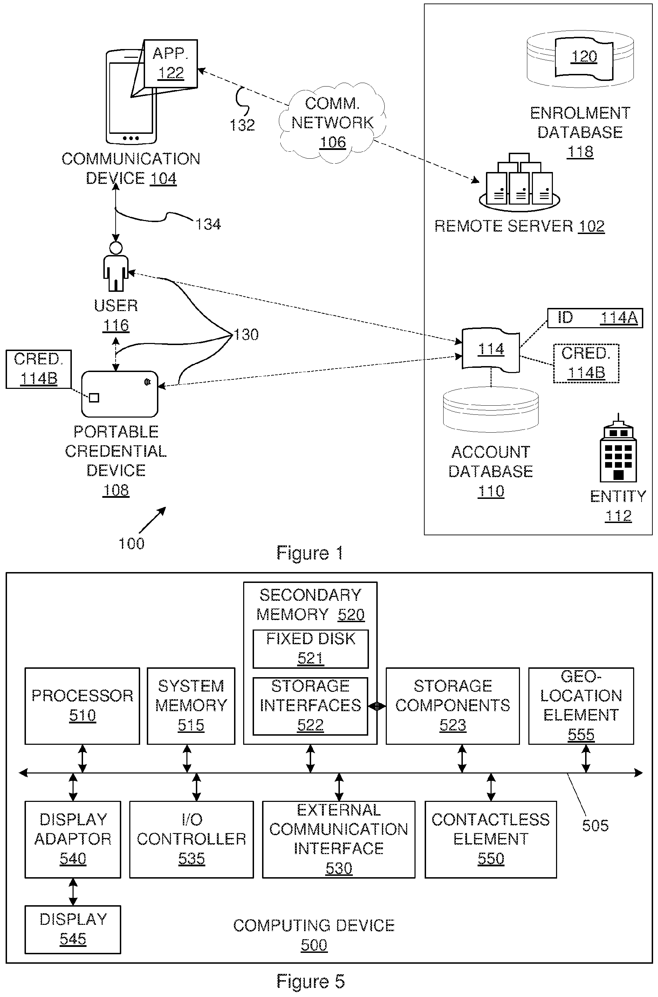

Figure 1 is a schematic diagram which illustrates an exemplary system (100) for verifying an association between a communication device and a user. The system may include a remote server (102), a communication device (104) and a portable credential device (108). The remote server (102) and communication device (104) may communicate with each other via an appropriate communication network (106), such as the Internet.

The remote server (102) may be any appropriate computing device performing a server role, such as server computer, server computer cluster, distributed server computer, cloud-based server computer or the like. In one exemplary scenario, the remote server (102) may be maintained or operated by an authentication service provider. An authentication service provider may provide authentication services to entities such as companies, financial institutions, governmental agencies and the like. Authentication services may include services whereby interactions between the entity and a user are authenticated. In another exemplary scenario, the remote server (102) may be maintained or operated by the relevant entity directly.

The remote server (102) may have access to an account database (110) in which user accounts are maintained by an entity (112). Each user account (114) may be uniquely associated with a user identifier (114A), a credential (114B) and a user (116). Each user account (114) may further be associated with a communication address of the communication device (104), such as a mobile station international subscriber directory number (MSISDN). Note that the credential (114B) is not necessarily stored in the account database (110). In some cases, a corresponding data element (e.g. a public key corresponding to a credential being a private key) may be stored in the account database (110). The user account (114) may nevertheless be associated with the credential.

In the illustrated embodiment, the entity (112) may be a financial institution, such as a bank, and the user account (114) may be a user financial account against which the user (116) may conduct financial transactions. The user identifier (114A) may be any suitable identifier used by the entity (112) to uniquely identify the user (116) of the user account (114). In some cases the user identifier (114A) may be an entity-issued user identifier issued by the entity to the user to enable the user, for example, to access an internet-based (e.g. internet banking) facility offered by the entity. Other exemplary identifiers may include, for example, one or more of: a national identity number; a mobile phone number; an email or other electronic communication address; a unique login identifier (e.g. username and password combination) or the like.

The credential (114B) may be any suitable data construct which uniquely identify the portable credential device (108). The credential may include payment credentials or a subset of payment credentials with which a user may transact against the user account. "Payment credentials" as used herein may include a data construct usable in conducting a financial transaction, such as Track 1 or Track 2 payment credentials, Europay-MasterCard-Visa (EMV) formatted payment credentials and/or one or more of: a primary account number (PAN), an expiry date, a card verification value (CVV), a service code, a cardholder name and the like. The credential may further include an encryption key (e.g. a private key or symmetric key). In some implementations the credential may include an application cryptogram (AC) card key which is unique to the portable credential device. The AC card key may be generated using an AC master key which may be used by an authorisation system associated with an issuer of the portable credential device to decrypt messages from the portable credential device. In some implementations the credential may include payment credentials encrypted using an encryption key such as an AC card key.

It should be appreciated that the entity may be any appropriate entity providing a suitable portable credential device. In other embodiments, for example, the entity may be a government agency (e.g. a department of home affairs, etc.) providing a smart identity (ID) card, a health insurance provider providing a smart health insurance card or, a security token provider (e.g. Fast Identify Online "FIDO" Alliance, etc.) providing a portable security token (e.g. a FIDO token) or the like. Similarly, the user account may be any appropriate data record maintained by the entity and which is uniquely associated with a user identifier, a credential and a user.

The user identifier (114A) and credential (114B) may be issued to and associated with the user (116) when or shortly after the user registers or establishes the user account (114). For example, in the case of a user financial account, the user identifier (114A) and credential (114B) may be issued to and associated with the user (116) when the user registers or opens the financial account with the entity (112). In some implementations, the credential (114B) itself may not be stored in the account database (110) but may be associated therewith. For example in the case of the credential (114B) being a private key or an AC card key, the account database (110) may store a corresponding public key or AC master key that was used to derive the AC card key, as the case may be.

The portable credential device (108) may be issued to the user (116) by the entity (112) and may have the credential (114B) embossed thereon or encoded therein. The portable credential device (108) may be a smart card in the form of a plastic card with a built-in microprocessor. In some embodiments, the portable credential device (108) may be a proximity communication enabled smart card (e.g. a contactless EMV (Europay-Mastercard-Visa) card). In the illustrated embodiment, the portable credential device (108) is a proximity communication enabled smart card (e.g. a contactless bank card) into which the credential is encoded and which the user (116) may use to transact against the user account (114).

The entity (112) may require the user (116) to report loss or theft of the personal credential device (108) so that the personal credential device and associated credential may be revoked to prevent unauthorized use thereof. As the portable credential device (108) is issued to the user by the entity for his or her personal use, it may be said that the user (116) is associated with the portable credential device (108). Due to the sensitivity of the credential (114B), e.g. in the case of payment credentials, and the manner in which the user is expected to protect the credential and portable credential device from theft and loss, it may be said that the association between the user (116) and the credential (114B) is a verified one, as the user (116) is expected to report loss or theft of the portable credential device (108) and/or credential (114B) to the entity as soon as he or she becomes aware of same. That is, the user may be expected to inform the entity as soon as the portable credential device is lost or stolen such that the portable credential device and associated credential may be revoked and/or disabled and the verified association between the user and portable credential device destroyed.

The remote server (102) may also have access to an enrolment database (118) in which a user record (120) of the user (116) enrolled with the system is linked to a corresponding user account (114) maintained by the entity (112). In other cases, however, the enrolment database and account database may be one and the same and the user record and/or user account may be one and the same.

The communication device (104) is under the authorized control of the user (116) for his or her personal use (i.e. generally to the exclusion of others). In this manner it may be said that the communication device (116) is associated with the user (116). The communication device (104) may be any appropriate computing device capable of communicating over the communication network (106). The communication device (104) may be a portable or mobile communication device and may for example be the user's personal communication device (e.g. their personal smart phone). Exemplary communication devices include: a mobile phone, such as a smart phone; a table computer; a personal digital assistant; a wearable computing device; a smart appliance; a personal computer (e.g. laptop or desktop computer) or the like. The communication device (104) may have an application (122) installed thereon. The application (122) may be provided by the entity (112) (or by an authorisation service provider on behalf of the entity) and may enable the user (116) to transact against or otherwise interact with the user account (114) using the communication device (104). The application (122) and/or communication device (104) may be configured to establish a secure communication channel with the remote server (102) via which the communication device (104) and/or application (122) are uniquely identifiable by the remote server (102). In this manner, the remote server (102) is able to distinguish messages and/or data received from the communication device (104) from messages and/or data received from other communication devices and to attribute received messages and/or data as having been received from the communication device (104) and/or application (122).

There thus exists a verified association (130) between: the user (116) and the user account (114); the portable credential device 108) and the user account (114); and, the portable credential device (108) and the user (116). Further, a secure communication channel (132) can be established between with the remote server (102) and communication device (104) / application (122) by way of which the communication device (104) and/or application (122) are uniquely identifiable by the remote server (102).

The described systems and methods enable an association (134) between the communication device (104) and the user (116) to be established and/or verified. This may be achieved by utilising the verified, pre-existing association (130) which exists between the user (116) and the portable credential device (108). Some implementations described herein may enable an association (134) between the application (122) and the user (116) to be established and/or verified by utilising the verified, pre-existing association (130) which exists between the user (116) and the portable credential device (108).

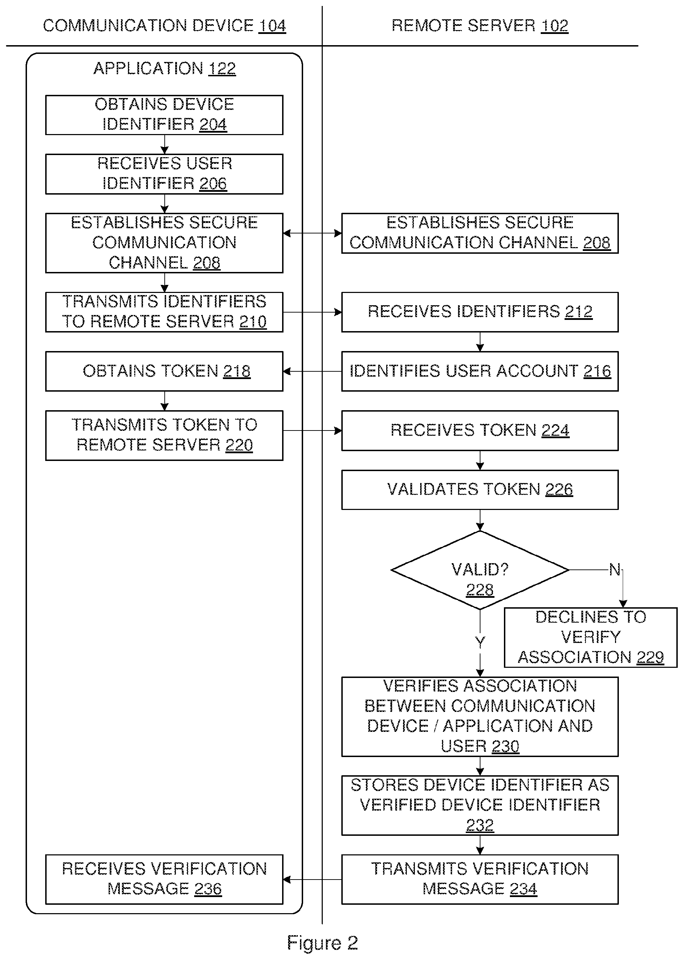

Figure 2 is a swim-lane flow diagram which illustrates an exemplary method for verifying an association between an application executing on a communication device and a user. The method may be performed by a system such as the system (100) described above and respective swim-lanes indicate respective operations, functions, steps or processes performed by respective devices. The operations, functions, steps or processes described as being performed by the communication device (104) may be performed by the application (122).

The entity (112) may provide an application (122) by way of which the user (116) may transact against the user account (114) maintained by the entity. For example in the case of a financial institution, the application may enable the user to conduct financial transactions (e.g. make payments, conduct balance enquiries, etc.) using the user's communication device.

Initially the user (116) may download and install the application (122) onto the communication device (104). Before the user can use the application, he or she may need to enrol the application. Enrolling the application may serve to create a one-to-one link between the application (122) and the user account (114) and hence between the application (122) and the user (116). Enrolling the application may include the communication device obtaining (204) a device identifier capable of uniquely identifying the communication device (104).

In the described embodiment, an association between the application (122) and the user (116) is verified. Hence, the device identifier may be or may include an application identifier which is capable of uniquely identifying the application (122) executing on the communication device (104). The device identifier may be a function of one or more of a unique identifier and/or private key bound to the application and one or more identifiers associated with the communication device (104) (e.g. IMEI, IMSI, etc.). "Device identifier" as used herein should, if required by the context, be interpreted to be or include an application identifier capable of uniquely identifying the application executing on the communication device.

In some implementations the device identifier may be generated on the device and/or by the application and may be a function of identifiers associated with the communication device (104), for example a function of one or more of the International Mobile Equipment Identity (IMEI) number, the International Mobile Subscriber Identity (IMSI) number of a subscriber identification module (SIM) card being used in the communication device and a random number securely stored in a memory of the communication device. In another implementation, the device identifier may be a device certificate, such as a digital certificate, and associated public and private keys, which may either be generated on the device or obtained from a relevant certificate authority (CA).

The communication device (104) may receive (206) a user identifier (114A) input into the communication device via a user interface (e.g. via an on-screen keyboard). The user identifier (114A) may have previously been associated with the user account (114), for example at the time the user (116) opened or registered the account and may be uniquely associated with the account (114). As will be explained below, in some cases the user identifier may not be required for enrolment.

The communication device (104) and remote server (102) may establish (208) a secure communication channel. The communication device may be uniquely identifiable by the remote server over the secure communication channel. The secure communication channel may for example be an encrypted link (e.g. secure sockets layer or transport layer security link) over the communication network (106) between the communication device (104) and remote server (102).

In some cases establishing (208) the secure communication channel may include encrypting selected messages or payloads to be transmitted from the communication device with a private key known only to the communication device and having a corresponding public key, known to the remote server and having been registered in association with the user account. As only the communication device has access to the private key, communications received from the communication device encrypted in this manner can be identified as having originated from the communication device. In some cases, establishing (208) the secure communication channel may include encrypting a token being transmitted from the communication device to the remote server using the communication device private key (and optionally a remote server public key associated with a private key securely stored at the remote server).

In other cases, establishing (208) the secure communication channel may include a handshake procedure by way of which the communication device identifies itself to the remote server (and optionally vice versa). The handshake procedure may be a standard SSL or TLS handshake procedure and may include a certificate exchange and verification with a certificate authority.

The communication device (104) may transmit (210) the device identifier and user identifier (114A) to the remote server (102) for association thereat. The identifiers may be transmitted from the communication device (104) to the remote server (102) via the secure communication channel or otherwise via the communication network (106). The remote server (102) may receive (212) the device identifier and user identifier (114A) from the communication device (104) for association with each other.

The remote server (102) may identify (216) the user account (114) using the user identifier (114A). For example, the remote server (102) may query the account database (110) with the user identifier (114A) so as to identify the corresponding user account (114). At this stage, it may be said that there is a purported, or unverified, association between the user and the communication device. This purported association cannot be said to be verified as the user identifier may have been obtained by an unscrupulous third party without the user's consent and/or knowledge (e.g. by phishing, etc.) and may have been transmitted from a spurious device (i.e. not the user's device).

Enrolment of the application (122) may include the communication device (104) obtaining (218) a token at least a portion of which includes or is derived from a credential (114B) stored within a portable credential device (108) of the user (116). The credential (114B) may have previously been associated with the user (116) in a user account. The portable credential device (108) may for example be a proximity communication enabled smart card. In the case of the entity being a financial institution the portable credential device may be a proximity communication enabled bank card (e.g. a near field communication (NFC) enabled credit, debit or check card) and the credential may include payment credentials (or a subset thereof) which are usable in conducting a financial transaction against the user account (114).

In some implementations a portion of the token may include the credential (114B) and obtaining (218) the token may include obtaining the credential from the portable credential device. The token may include additional information, such as a cryptograph which is configured to validate that the token is relevant to the current session and not a replay attack. Obtaining the token may include generating the cryptograph. The cryptograph may serve to prevent replay of the token and may for example include a set of data elements (e.g. a nonce) which have been signed by the portable credential device. The set of data elements may include a random number received from the server or the like. In some cases, the data elements may include the device identifier and a time stamp. The cryptograph may be generated by the portable credential device or the communication device.

In some implementations the communication device (104) may receive a set of data elements from the remote server (102) and obtaining (218) the token may include deriving a portion of the token by performing an operation on the data elements and (or using) the credential to generate the token. The operation may for example include hashing the data elements and the credential together to generate the token. In other cases the operation may include signing or encrypting the data elements using the credential or suitable encryption key. The credential may for example include an encryption key (such as an AC card key) and signing or encrypting the data elements may use the encryption key. The token may be the resulting cipher text produced by encrypting or singing the data elements with the credential (being the encryption key).

In some implementations the operation may be performed on the portable credential device (108) and obtaining (218) the token may include forwarding the set of data elements to the portable credential device (108) and receiving the token from the portable credential device. In some implementations, for example, the data elements may be included in a command (e.g. a Card Action Analysis command) requesting the portable credential device (108) to generate the token for the transaction. The token may be or include an application cryptogram whose legitimacy may be verifiable by the entity having issued the portable credential device.

Alternatively the operation may be performed on the communication device (104) and obtaining (218) the token may include obtaining the credential from the portable credential device (108) and performing the operation on the data elements and (or using) the credential to generate the token at the communication device (104). In some cases, a part of the operation may be performed on the portable credential device (e.g. generating a cryptograph based on a nonce) while another part of the operation may be performed on the communication device.

The communication device (104) may interact with the portable credential device (108) by way of a proximity communication interface. The proximity communication interface may be a radio frequency proximity communication interface, such as NFC, radio frequency identification (RFID), Bluetooth (registered trade mark) Low Energy (BLE) or the like. In some implementations the proximity communication interface may be an EMV-certified proximity communication interface. In some cases the proximity communication interface may be an NFC interface configured for one or more of: reader, writer and peer-to-peer modes of operation.

Obtaining (218) the token may require the user (116) to bring the portable credential device (108) into proximity with the communication device (104) so that the devices (104, 108) may communicate via the proximity communication interface.

The communication device (104) may transmit (220) the token (portions of which including and/or being derived from the credential and in some cases including a cryptograph) to the remote server (102) for verification of the association between the application (122) and the user thereat. Transmission may be via the secure communication channel. The secure communication channel may operate to bind the token to the communication device (e.g. the device identifier) and may protect the token from interception and replay. As noted, transmitting the token via the secure communication channel may include encrypting a packet or payload including the token in such a way that only the remote server can decrypt it. This may be achieved by using the server public key (and optionally the communication device private key) for encryption of the packet at the communication device. In other cases, transmitting the token via the secure communication channel may include transmitting the token via a secure sockets layer or transport layer security communication channel in which both parties are authenticated. In either case, transmitting by way of the secure communication channel enables the remote server (102) to uniquely identify the communication device. This may either be because of the certificate exchange and/or handshake procedure implemented in establishing the secure communication channel or by virtue of data packets being encrypted with the communication device private key, to which only the communication device has access.

The remote server (102) may receive (224) the token from the communication device (104) via the secure communication channel. In some cases, the remote server may identify the communication device using the secure communication channel (e.g. by decrypting a data packet using the communication device public key having previously been linked to the communication device and/or user record).

The remote server (102) may validate (226) the received token. Validating (226) the received token may include validating that the token includes or was derived from a credential having previously been associated with the user in the user account. Where the token includes the credential, validating (226) the token may include comparing the credential against a credential associated with the user account (114). In some implementations, the user account (114) may be the user account having been previously identified using the user identifier (114A).

In other implementations, the user may not have supplied the user identifier and the token may be used to identify the relevant user account and to link the device identifier to the user account so as to establish a verified association between the communication device and the user. In such a case, the token may include the credential and a cryptograph and validating the token may include validating the cryptograph.

Where the token is derived from the credential, validating (226) the received token may include checking the validity of the token. For example in the case of the token being a hash of the credential and data elements, validating (226) the token may include accessing the credential from the account database (110), accessing a stored copy of the data elements and performing a hash operation to generate a test token against which the received token can be compared.

In the case of the token being encrypted or signed using the credential, validating (226) the token may include decrypting the token using a corresponding key in order to obtain the set of data elements and verify that they correspond to those that were transmitted or otherwise validating the token using, e.g., a digital certificate associated with the signed token. In cases in which the token is an application cryptogram, validating (226) the token may include verifying the legitimacy of the application cryptogram based on information known to the remote server.

If (228) the token is valid, the remote server (102) may verify (230) the association between the application (122) and the user (116). This may include recording the verification of the association between the application (122) and the user (116). If the token is not valid, the remote server (102) may decline to verify the association between the communication device (104) and the user (116). If (228) the token is not valid, the remote server (102) may decline (229) to verify the association between the application and the user. The remote server may commence a clean-up operation including, e.g. prompting the user to try again, to physically visit the entity to verify the association, terminating the process, flagging an error or suspicious activity or the like.

If the token is valid and/or if the association between the application (122) and the user (116) is verified, the remote server (102) may store (232) the device identifier (which may be or include an application identifier unique to the application (122)) as a verified device identifier in association with one or both of the user identifier (114A) and the user account (114). For example, the remote server (102) may create a user record (120) in an enrolment database (118). The user record (120) in the enrolment database (118) may be associated with the user account (114) in the account database (110). One or more of the user identifier (114A), device identifier, or credential (114B) may be stored in association with the user record (120). In another implementation, the remote server may not maintain an enrolment database and may rather store the device identifier as a verified device identifier in the account database in association with the user account.

Storing the device identifier as a verified device identifier in association with one or both of the user identifier (114A) and the user account (114) may indicate that the association between the application and the user has been verified. Advantageously, this may be achieved without the user needing to answer knowledge-based question, physically present him- or herself at the entity (e.g. financial institution) together with the communication device, etc. in order to verify the association. Instead, a pre-existing and verified association between the user, the portable credential device and user account is used to impute or bestow verification of the purported association by virtue of the fact that the application and portable credential device are under the control of the same user.

The remote server (102) may transmit (234) a verification message to the communication device (104). The verification message may indicate verification of the association between the application and the user and may be transmitted from the remote server (102) to the communication device (104) via the secure communication channel. The communication device (104) may receive (236) the verification message from the remote server (102).

Once enrolled, the user (116) may use the communication device (104) and application (122) installed thereon to interact with the entity (112) remotely, via the communication network (106). As the association between the application (122) and the user has been verified, and as the communication device (104) and/or application (122) is uniquely identifiable by the entity (112), the entity may consider messages, instructions and the like received from the communication device (104) to have originated from the user (116). This may obviate the need for other methods of authentication and may provide a more seamless digital interface between the user and entity.

In some implementations, the association between an application and/or communication device and a user may be verified after enrolment of the application with the remote server. For example, the association may be required to be verified when the consumer is conducting a transaction (e.g. to ensure that the user is still in control of the communication device). The verification may for example be performed during a transaction authorization procedure in which the user is prompted on the communication device for his or her authorization of a particular transaction.

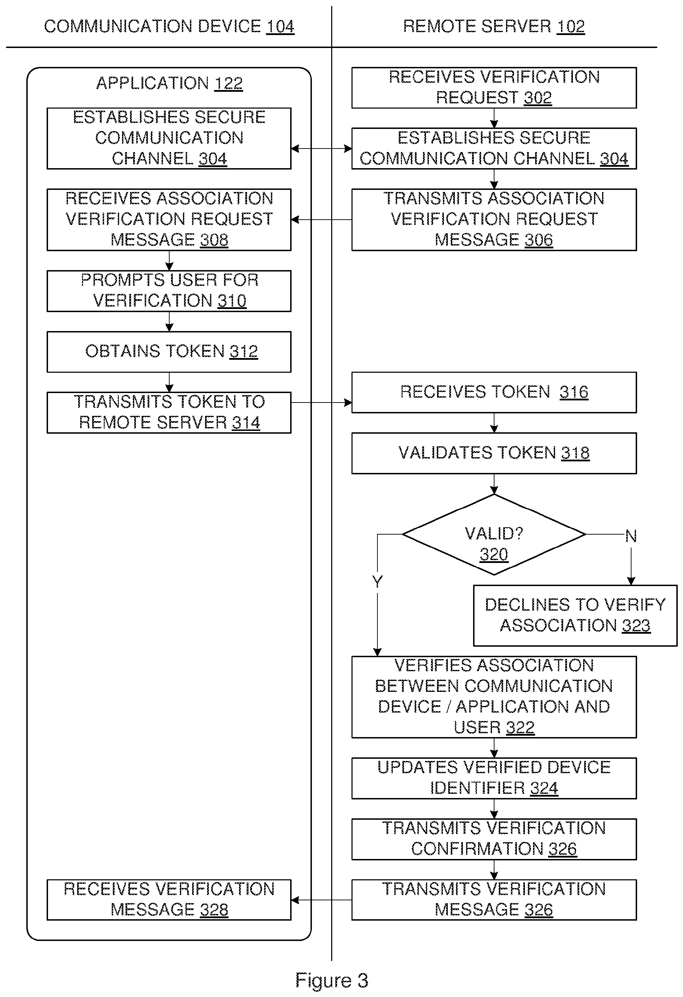

Figure 3 is a swim-lane flow diagram which illustrates method steps which may be conducted by a system, such as the system (100) described above, for verifying an association between an enrolled application and a user. In the Figure, respective swim-lanes indicate respective operations, functions, steps or processes performed by respective devices. The operations, functions, steps or processes described as being performed by the communication device may be performed by the application.

The user may be conducting a transaction, such as a financial transaction, against a user account (114) (e.g. a financial account) maintained by an entity (112). The user may be using an application (122), resident on a communication device (104), or another appropriate device to conduct the transaction and may be prompted for his or her authorization of the transaction. As mentioned, the application (122) and/or communication device (104) may have previously been enrolled with a remote server (102) operated by the entity (112) or by an authentication service provider on behalf of the entity.

The remote server (102) may receive (302) a verification request from the entity responsive to the user (116) transacting or requesting to transact against the user account (114). The request may identify the relevant communication device (104), for example by including the verified device identifier or a communication address of the device (104) or alternatively a user identifier pointing to the verified device identifier or a communication address of the device (104). The verification request may be received together with a transaction authorization request.

The remote server (102) may establish (304) a secure communication channel with the communication device (104). Establishing the secure communication channel may include the communication device (104) uniquely identifying itself to the remote server (102) and vice versa. The communication device (104) may for example supply a device identifier to the remote server (102) to enable the remote server (102) to uniquely identify the communication device. In some implementations, the communication device (104) and remote server may exchange certificates (e.g. where the device identifier is a digital certificate) and may validate each other's certificates with a relevant certificate authority, for example using a certificate authority digital certificate known to both the communication device and remote server. In some cases, a secure communication channel may be achieved by encrypting data packets at the communication device before transmitting these to the remote server.

The remote server (102) may transmit (306) an association verification request message to the communication device (104). The association verification request message may request that the user verify an association between the application and the user. The association verification request message may include a set of data elements usable for generating a token and/or a cryptograph included in the token. The association verification request message may be transmitted from the remote server (102) to the communication device (104) via the secure communication channel. The communication device (104) may receive (308) the association verification request message from the remote server (102). The association verification request message may include a transaction authorization request. In some cases, the association verification request message may cause the communication device (104) to launch the application (122).

The communication device (104) may prompt (310) the user (116) to verify the association using the portable credential device (108). Prompting the user for verification may for example cause a prompt to be displayed on a display screen of the communication device and may also generate and output an alert (e.g. a sound and/or haptic alert). Prompting the user may also include activating a credential obtaining component of the communication device so that credentials may be obtained. The communication device (104) may also prompt the user for a passcode (e.g. personal identification number (PIN), password, etc.) which the user may have selected when enrolling the application (122) and which the user may be required to input when authorizing a transaction. The passcode input by the user may be transmitted to the remote server (102) together with or separately from the credential.

In some cases the user (116) may be required to bring the user's portable credential device (108) into close proximity to (e.g. physically tap) the communication device in order to initiate communications. In other cases, e.g. in the case of a FIDO token or a biometric enabled portable credential device, the user may input an instruction into the portable credential device (108) (e.g. by touching it or providing a biometric fingerprint) to cause the portable credential device to establish proximity-based communication with the communication device (104).

The communication device (104) may obtain (312) a token derived from a credential (114B) stored within the portable credential device (108) of the user (116). In some implementations a portion of the token may include the credential (114B) and obtaining (312) the token may include obtaining the credential from the portable credential device.

In some implementations obtaining (312) the token may use the credential (114B) and the data elements included in the association verification request message to derive a portion of the token. As described above, deriving the token may include performing an operation on the data elements and the credential to generate the token. The operation may for example include hashing the data elements and the credential together to generate the token or signing or encrypting the data elements using the credential. The operation may be performed on the portable credential device (108) or alternatively on the communication device (104). Thus in some cases, the credential (114B) may not be required to leave the portable credential device (108). Instead a representation (the token) is used which can be verified remotely. In some implementations a challenge (the data elements) can be signed with a certificate /private key on the portable credential device and/or communication device. A corresponding public key or certificate may be provided at the account database for verifying the token. Thus symmetric and asymmetric implementations may be provided.

The communication device (104) may transmit (314) the token to the remote server (102) for verification of the association between the application and the user thereat. Transmission may be via the secure communication channel. The secure communication channel may operate to bind the token to the communication device (e.g. the device identifier) and may protect the token from interception and replay. As noted, transmitting the token via the secure communication channel may include encrypting a packet or payload including the token in such a way that only the remote server can decrypt it. This may be achieved by using the server public key (and optionally the communication device private key) for encryption of the packet at the communication device. In other cases, transmitting the token via the secure communication channel may include transmitting the token via a secure sockets layer or transport layer security communication channel in which both parties are authenticated.

The remote server (102) may receive (316) the token, and optionally a passcode, from the communication device via the secure communication channel. In some cases, the remote server may identify the communication device using the secure communication channel (e.g. by decrypting a data packet using the communication device public key having previously been linked to the communication device and/or user record).

The remote server (102) may validate (318) the received token. Where the token (or a portion thereof) includes the credential, validating (318) the token may include comparing the credential against a credential associated with the user account. As described above, in some scenarios, validating (318) the token may decrypt the token or generate a test token against which the received token may be compared. In some cases validating the token may validate a biometric fingerprint included in the token. The user account (114) may be identified using the device identifier of the communication device received during establishment of the secure communication channel or possibly using the user identifier which may have been transmitted to the remote server together with the credential.

If (320) the token is valid, the remote server (102) may verify (322) the association between the application (122) and the user (116). If the token is not valid, the remote server (102) may decline (323) to verify the association between the application (122) and the user (116). The remote server (104) may also check the passcode against a corresponding offset.

If the token is valid, the remote server (102) may update (324) the validity of the verified device identifier stored in association with one or both of the user identifier (114A) and the user account (114). For example, the verified device identifier may be associated with time-to-live and, if not updated, may expire. Updating the validity may extend the time-to-live of the verified device identifier. Once the communication device (104) has been verified, the transaction (e.g. financial transaction) may be allowed to proceed and the remote server (102) may transmit (326) a verification message to the entity to indicate to the entity that the association has been verified and that the transaction may continue. The transaction may, for example, be authorized.

The remote server (102) may transmit (328) a verification and/or authorization message to the communication device (104). The verification and/or authorization message may indicate verification of the association between the application (122) and the user and/or authorization of the transaction and may be transmitted from the remote server (102) to the communication device (104) via the secure communication channel. The communication device (104) may receive (330) the verification and/or authorization message from the remote server (102).

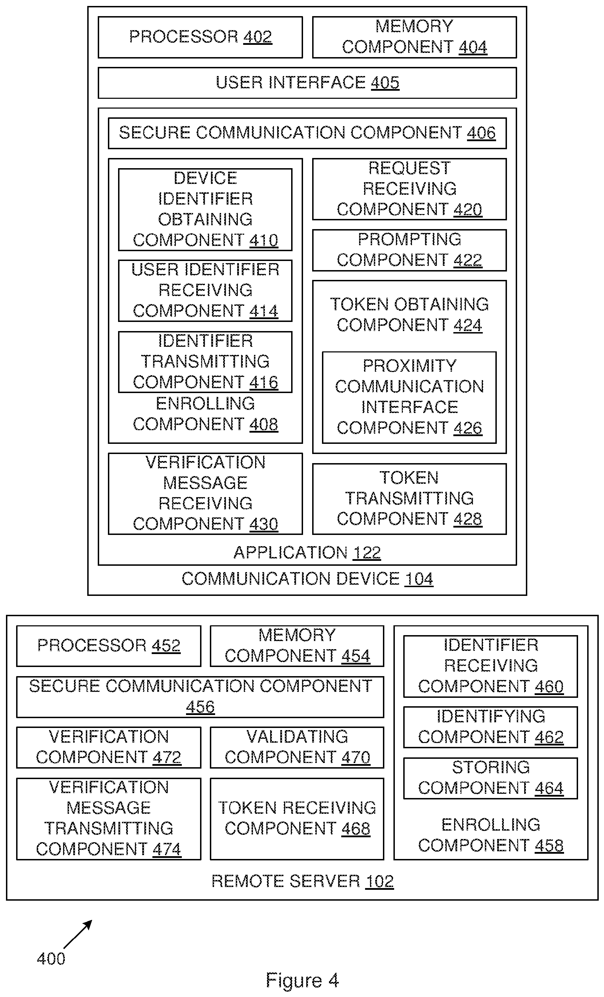

Figure 4 is a block diagram which illustrates components of an exemplary system (400) for verifying an association between an application and a user. The system (400) may include a communication device (104) and a remote server (102).

The communication device (104) may be under the authorized control of a user (116) (e.g. it may be the user's personal or employer-provided communication device). The communication device (104) may include a processor (402) for executing the functions of components described below, which may be provided by hardware or by software units executing on the communication device (104). The software units may be stored in a memory component (404) and instructions may be provided to the processor (402) to carry out the functionality of the described components. Some or all of the components may be provided by a software application (122) downloadable onto and executable on the communication device (104).

The communication device may have a user interface (405) configured to receive input and instructions from a user and to output and data and information to the user. The user interface (405) may include a touch-sensitive display screen on which a soft keyboard may be displayed via which data can be input and output from and to the user.

The application (122) may be a secure application and may be provided by an entity (112) or an authentication service provider on behalf of the entity (112). The application (122) may provide a secure communication component (406) which may be arranged to establish a secure communication channel with the remote server (102) or otherwise encrypt and decrypt data packets being transmitted between the remote server and communication device. The communication device (104) and/or the application (122) executing on the communication device (104) may be uniquely identifiable by the remote server (102) over the secure communication channel.

The application (122) may include an enrolling component (408) arranged to enrol the application (122) with the remote server (102). The enrolling component (408) may be invoked when the application (122) is launched for the first time after having been downloaded onto the communication device (104).

The enrolling component (408) may include a device identifier obtaining component (410) configured to obtain a device identifier capable of uniquely identifying the communication device (104). In some implementations the device identifier may be a device certificate having an associated public-private key pair which the device identifier obtaining component (410) may generate locally or request from a certificate authority. In some implementations the device identifier may uniquely identify the application (122).

The enrolling component (408) may also include a user identifier receiving component (414) configured to receive a user identifier (114A) input into the communication device via the user interface (405). The user identifier (114A) may have previously been associated with the user account (114) (e.g. when the user registered or opened the account).

The enrolling component (408) may further include an identifier transmitting component (416) arranged to transmit the device identifier and user identifier to the remote server for association with each other thereat. The identifier transmitting component (416) may transmit the identifiers via the secure communication channel.

The application (122) may also include a request receiving component (420) arranged to receive an association verification request from the remote server (102). The association verification request may be received from the remote server (102) via the secure communication channel and may request the user to verify an association between the application and the user.

The application (122) may include a prompting component (422) arranged to prompt the user to verify the association using the portable credential device. The prompting component (422) may for example cause a prompt to be displayed to the user via the user interface (405) and/or may output audible or haptic alerts.

The application (122) may include a token obtaining component (424) arranged to obtain a token including or derived from a credential (114B) stored within a portable credential device (108) of the user (116). As discussed in the foregoing, the credential (114B) may have previously been associated with the user (116) in a user account (114). In some implementations, the portable credential device (108) may be a smart card or a proximity communication enabled smart card (e.g. an ISO 14443-4 enabled smart card, bank card, or the like). The token obtaining component (424) may include a proximity communication interface component (426) which is configured to interact with the portable credential device (108) via a proximity communication interface. The proximity communication interface component (426) may provide a radio frequency proximity communication interface (e.g. NFC, RFID, BLE, etc. interface). In one implementation, for example, the proximity communication interface component (426) implements an application protocol data unit (APDU) to facilitate communication between the portable credential device (108) and the communication device (104). The APDU implemented by the proximity communication interface component (426) may be configured in terms of ISO/IEC 7816-4 to enable the token obtaining component (424) to obtain the token, credential and/or cryptograph, as the case may be, from a portable credential device (108) being an NFC-enabled bank card or the like. The proximity communication interface component (426) may interface with an appropriate contactless element of the communication device providing the appropriate radio frequency front-end including for example an antenna and transceiver.

In other implementations, the credential obtaining component may interact with a camera of the communication device and may obtain an image of the portable credential device on which the credential is visible, the image including a graphical representation of the credential which can be obtained using optical character recognition or the like. In other cases, the proximity communication interface may use near sound communication.

The application (122) may include a token transmitting component (428) arranged to transmit the token to the remote server (102). The token transmitting component (428) may transmit the token for verification, at the remote server, of the association between the application (122) and the user (116). Transmission may be via the secure communication channel.

The application (122) may include a verification message receiving component (430) arranged to receive a verification message from the remote server (102). The verification message may indicate verification, at the remote server, of the association between the application (122) and the user (106) and may be received via the secure communication channel.

The remote server (102) may include a processor (452) for executing the functions of components described below, which may be provided by hardware or by software units executing on the remote server (102). The software units may be stored in a memory component (454) and instructions may be provided to the processor (452) to carry out the functionality of the described components. In some cases, for example in a cloud computing implementation, software units arranged to manage and/or process data on behalf of the remote server (102) may be provided remotely. The remote server (102) may include a secure execution environment in which some or all of the components may be executed.

The remote server (102) may include a secure communication component (456) arranged to establish a secure communication channel with the communication device (104) or otherwise encrypt and decrypt data packets being transmitted between the remote server and communication device. The communication device (104) and/or application (122) may be uniquely identifiable by the remote server (102) in the secure communication channel.

The remote server (102) may include an enrolling component (458) arranged to enrol the application (122) executing on the communication device (104) and/or the communication device (104) itself with the remote server (102). The enrolling component (458) may include an identifier receiving component (460) arranged to receive the device identifier and the user identifier (114A) from the communication device (104). The identifiers may be received from the communication device (104) for association with each other and, for example, a user account (114) and/or a user record (120). As mentioned previously, the user identifier (114A) may have previously been associated with the user account (114). The enrolling component (458) may include an identifying component (462) arranged to identify the user account (114) using the user identifier (114A) (e.g. by querying the account database (110) using the user identifier (1 14A)). The enrolling component (458) may further include a storing component (464) arranged to store the device identifier as a verified device identifier in association with one or both of the user identifier and the user account. The device identifier may be stored as a verified device identifier in the user account (114) and/or in the user record (120). The device identifier may be stored as a verified device identifier only if a verification component (472) verifies the association between the communication device (104) and the user (116). In some cases, at least a portion of the token may include the credential and the enrolling component may use the credential to identify the user account and store the device identifier as a verified device identifier in association with the user account.

The remote server (102) may include a token receiving component (468) arranged to receive a token from the communication device (104). The token receiving component (468) may receive the token via the secure communication channel. The token may be derived from or may include a credential (114B) stored within a portable credential device (108) of the user (116). The credential may have previously been associated with the user (116) in a user account (114).

The remote server (102) may include a validating component (470) arranged to validate the received token. In some implementations the token may include the credential and the validating component (470) may query the user account (114) or the user record (120), identified for example using one or both of the user identifier or device identifier, in order to compare the received and stored credentials. In other implementations the validating component may perform a hash or signing or decryption operation in order to validate the token.

The remote server (102) may also include a verification component (472) arranged to verify the association between the application (122) and the user (116) if the token is valid.

The remote server (102) may further include a verification message transmitting component (474) arranged to transmit a verification message to the communication device (104). The verification message may indicate verification of the association between the application and the user and may be transmitted to the communication device (104) via the secure channel.

Systems and methods for verifying an association between a communication device, such as a smart phone, and/or an application executing thereon and a user are described. The described systems and methods enable the association (e.g. by virtue of authorized control or possession) between the user and communication device to be verified without the user needing to answer knowledge-based security questions, physically visit a branch of an entity wishing to verify the association or the like. The described systems and methods use a pre-existing, verified association between a user and a portable credential device in order to verify the association between the user and the application and/or communication device.

In one exemplary scenario, a user may use his or her bank-issued NFC-enabled credit/bank card with his or her NFC-enabled phone to prove that he or she is in possession of the bank issued card and hence that the phone can be enrolled for transacting with the relevant bank against the account with which the bank card is associated.

The systems and methods may accordingly enable transfer of a "something I have" credential in order to verify an association between a user and a communication device. Embodiments provide for this to be conducted during enrolment of the communication device and/or during a transaction (e.g. for each transaction the user is requested to tap his or her NFC enabled bank card against his or her communication device). The described systems and methods may accordingly enable a user to demonstrate that he or she is in possession of a particular portable credential device and that the relevant portable credential device is present during the enrolment or transaction. The described systems and methods may enable co-location of a communication device and portable credential device at a particular point in time to be proved.

The system and methods described in the foregoing are exemplary and various modifications or alterations may be made. In one exemplary embodiment, aspects of the disclosure may be used to verify a purported (but not necessarily specious) association between a user and a portable credential device. In such an embodiment, a verified association may already exist between the communication device and the user such that it can be known with a high degree of certainty that data and/or information received from the communication device originates from the user. In such an embodiment, the user may use the verified association that exists between the user and the communication device to establish a verified association between the user and a newly issued portable credential device. The user may for example obtain an unassigned or otherwise generic portable credential device and use the verified association which exists between the user and the communication device, as well as a proximity communication interface, to obtain a credential from the portable credential device and cause the credential to be linked with a user account maintained by the entity. In this manner, the user may link new portable credential devices and associated credentials to the user account, which links may be verified by virtue of the token having been received from the verified communication device.

Some aspects of the disclosure may accordingly provide a computer-implemented method for verifying an association between a user and a portable credential device or a communication device. The method conducted at a remote server may include establishing a secure communication channel with the communication device in which the communication device is uniquely identifiable by the remote server, wherein an existing association between the user and one of the portable credential device or the communication device has previously been verified. The method may include receiving a token from the communication device via the secure communication channel. The token may include or may have been derived from a credential stored within the portable credential device. The method may include validating that the existing association is verified. The method may include, if the existing association is validated as being verified, verifying the association between the user and the other of the communication device or portable credential device.

Figure 5 illustrates an example of a computing device (500) in which various aspects of the disclosure may be implemented. The computing device (500) may be embodied as any form of data processing device including a personal computing device (e.g. laptop or desktop computer), a server computer (which may be self-contained, physically distributed over a number of locations), a client computer, or a communication device, such as a mobile phone (e.g. cellular telephone), satellite phone, tablet computer, personal digital assistant or the like. Different embodiments of the computing device may dictate the inclusion or exclusion of various components or subsystems described below.

The computing device (500) may be suitable for storing and executing computer program code. The various participants and elements in the previously described system diagrams may use any suitable number of subsystems or components of the computing device (500) to facilitate the functions described herein. The computing device (500) may include subsystems or components interconnected via a communication infrastructure (505) (for example, a communications bus, a network, etc.). The computing device (500) may include one or more processors (510) and at least one memory component in the form of computer-readable media. The one or more processors (510) may include one or more of: CPUs, graphical processing units (GPUs), microprocessors, field programmable gate arrays (FPGAs), application specific integrated circuits (ASICs) and the like. In some configurations, a number of processors may be provided and may be arranged to carry out calculations simultaneously. In some implementations various subsystems or components of the computing device (500) may be distributed over a number of physical locations (e.g. in a distributed, cluster or cloud-based computing configuration) and appropriate software units may be arranged to manage and/or process data on behalf of remote devices.

The memory components may include system memory (515), which may include read only memory (ROM) and random access memory (RAM). A basic input/output system (BIOS) may be stored in ROM. System software may be stored in the system memory (515) including operating system software. The memory components may also include secondary memory (520). The secondary memory (520) may include a fixed disk (521), such as a hard disk drive, and, optionally, one or more storage interfaces (522) for interfacing with storage components (523), such as removable storage components (e.g. magnetic tape, optical disk, flash memory drive, external hard drive, removable memory chip, etc.), network attached storage components (e.g. NAS drives), remote storage components (e.g. cloud-based storage) or the like.

The computing device (500) may include an external communications interface (530) for operation of the computing device (500) in a networked environment enabling transfer of data between multiple computing devices (500) and/or the Internet. Data transferred via the external communications interface (530) may be in the form of signals, which may be electronic, electromagnetic, optical, radio, or other types of signal. The external communications interface (530) may enable communication of data between the computing device (500) and other computing devices including servers and external storage facilities. Web services may be accessible by and/or from the computing device (500) via the communications interface (530).

The external communications interface (530) may be configured for connection to wireless communication channels (e.g., a cellular telephone network, wireless local area network (e.g. using Wi-Fi^{™}), satellite-phone network, Satellite Internet Network, etc.) and may include an associated wireless transfer element, such as an antenna and associated circuitry. The external communications interface (530) may include a subscriber identity module (SIM) in the form of an integrated circuit that stores an international mobile subscriber identity and the related key used to identify and authenticate a subscriber using the computing device (500). One or more subscriber identity modules may be removable from or embedded in the computing device (500).

The external communications interface (530) may further include a contactless element (550), which is typically implemented in the form of a semiconductor chip (or other data storage element) with an associated wireless transfer element, such as an antenna. The contactless element (550) may be associated with (e.g., embedded within) the computing device (500) and data or control instructions transmitted via a cellular network may be applied to the contactless element (550) by means of a contactless element interface (not shown). The contactless element interface may function to permit the exchange of data and/or control instructions between computing device circuitry (and hence the cellular network) and the contactless element (550). The contactless element (550) may be capable of transferring and receiving data using a near field communications capability (or near field communications medium) typically in accordance with a standardized protocol or data transfer mechanism (e.g., ISO 14443/NFC). Near field communications capability may include a short-range communications capability, such as radiofrequency identification (RFID), Bluetooth^{™}, infra-red, or other data transfer capability that can be used to exchange data between the computing device (500) and an interrogation device. Thus, the computing device (500) may be capable of communicating and transferring data and/or control instructions via both a cellular network and near field communications capability.

The computer-readable media in the form of the various memory components may provide storage of computer-executable instructions, data structures, program modules, software units and other data. A computer program product may be provided by a computer-readable medium having stored computer-readable program code executable by the central processor (510). A computer program product may be provided by a non-transient computer-readable medium, or may be provided via a signal or other transient means via the communications interface (530).

Interconnection via the communication infrastructure (505) allows the one or more processors (510) to communicate with each subsystem or component and to control the execution of instructions from the memory components, as well as the exchange of information between subsystems or components. Peripherals (such as printers, scanners, cameras, or the like) and input/output (I/O) devices (such as a mouse, touchpad, keyboard, microphone, touch-sensitive display, input buttons, speakers and the like) may couple to or be integrally formed with the computing device (500) either directly or via an I/O controller (535). One or more displays (545) (which may be touch-sensitive displays) may be coupled to or integrally formed with the computing device (500) via a display (545) or video adapter (540).

The computing device (500) may include a geographical location element (555) which is arranged to determine the geographical location of the computing device (500). The geographical location element (555) may for example be implemented by way of a global positioning system (GPS), or similar, receiver module. In some implementations the geographical location element (555) may implement an indoor positioning system, using for example communication channels such as cellular telephone or Wi-Fi^{™} networks and/or beacons (e.g. Bluetooth^{™} Low Energy (BLE) beacons, iBeacons^{™}, etc.) to determine or approximate the geographical location of the computing device (500). In some implementations, the geographical location element (555) may implement inertial navigation to track and determine the geographical location of the communication device using an initial set point and inertial measurement data.

The foregoing description has been presented for the purpose of illustration; it is not intended to be exhaustive or to limit the invention to the precise forms disclosed. Persons skilled in the relevant art can appreciate that many modifications and variations are possible in light of the above disclosure.

Any of the steps, operations, components or processes described herein may be performed or implemented with one or more hardware or software units, alone or in combination with other devices. In one embodiment, a software unit is implemented with a computer program product comprising a non-transient computer-readable medium containing computer program code, which can be executed by a processor for performing any or all of the steps, operations, or processes described. Software units or functions described in this application may be implemented as computer program code using any suitable computer language such as, for example, Java^{™}, C++, or Perl^{™} using, for example, conventional or object-oriented techniques. The computer program code may be stored as a series of instructions, or commands on a non-transitory computer-readable medium, such as a random access memory (RAM), a read-only memory (ROM), a magnetic medium such as a hard-drive, or an optical medium such as a CD-ROM. Any such computer-readable medium may also reside on or within a single computational apparatus, and may be present on or within different computational apparatuses within a system or network.

Flowchart illustrations and block diagrams of methods, systems, and computer program products according to embodiments are used herein. Each block of the flowchart illustrations and/or block diagrams, and combinations of blocks in the flowchart illustrations and/or block diagrams, may provide functions which may be implemented by computer readable program instructions. In some alternative implementations, the functions identified by the blocks may take place in a different order to that shown in the flowchart illustrations.

The language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention, which is set forth in the following claims.

Finally, throughout the specification and claims unless the contents requires otherwise the word 'comprise' or variations such as 'comprises' or 'comprising' will be understood to imply the inclusion of a stated integer or group of integers but not the exclusion of any other integer or group of integers.

## Claims

1. A computer-implemented method for verifying an association between a communication device and a user to enrol an application executing on the communication device by way of which application the user transacts against a user account maintained by an entity, the method performed in a system including the communication device, a remote server and a proximity communication enabled smart card, wherein the communication device interacts with the proximity communication enabled smart card via a proximity communication interface, and wherein the remote server is maintained on behalf of the entity and has access to an enrolment database (118), the method comprising:
installing the application (122) on the communication device, wherein the application is provided by or on behalf of the entity;
establishing (208) a secure communication channel between the remote server and the communication device (104) with the communication device (104) uniquely identifiable by the remote server over the secure communication channel;
receiving (212), at the remote server from the communication device (104), a device identifier and a user identifier for association with each other, the user identifier having previously been associated with the user account;
using the user identifier to identify (216) the user account associated therewith;
receiving (224) a token at the remote server from the communication device (104) via the secure communication channel (208), wherein the token includes an application cryptogram obtained (218) by the communication device (104), via the proximity communication interface, from the proximity communication enabled smart card of the user which generates the application cryptogram by signing a set of data elements received at the communication device from the remote server (102) using an application cryptogram (AC) card key stored within the proximity communication enabled smart card such that at least a portion of the token has been derived from the AC card key stored within the proximity communication enabled smart card, the AC card key having previously been associated with the user in a user account (114) and having been generated using an AC master key usable by an authorisation system associated with an issuer of the proximity communication enabled smart card to decrypt messages from the proximity communication enabled smart card;
validating the received token (226) at the remote server, including verifying the legitimacy of the application cryptogram based on information known to the remote server;
once determined that the token is valid, verifying (230) the association between the communication device and the user and storing (232), at the remote server, the device identifier as a verified device identifier in association with one or both of the user identifier and the user account, including creating, by the remote server (102) in the enrolment database (118), a user record (120) associated with the user account (114);
wherein, once enrolled, the communication device (104) and application (122) installed thereon are usable to interact with the entity (112) remotely, via the communication network (106).

2. The method as claimed in claim 1, wherein the proximity communication enabled smart card is issued to the user by the entity for personal use such that the user (116) is associated with the proximity communication enabled smart card, wherein the AC card key is unique to the proximity communication enabled smart card, wherein an account database (110) stores the AC master key that was used to derive the AC card key, and wherein legitimacy of the application cryptogram is verifiable by the entity.

3. The method as claimed in claim 1 or claim 2, wherein the method conducted at the communication device includes:
obtaining the token, including forwarding the set of data elements to the proximity communication enabled smart card and receiving the token from the proximity communication enabled smart card.

4. The method as claimed in claim 3, wherein the data elements are included in a command requesting the proximity communication enabled smart card to generate the token for a transaction, wherein the command is a Card Action Analysis command.

5. The method as claimed in claim 3 or 4, wherein the method conducted at the proximity communication enabled smart card includes:
deriving the at least a portion of the token by performing an operation on the data elements using the AC card key to generate the token, including signing or encrypting the data elements using the AC card key, and wherein the token is the resulting cipher text produced by signing or encrypting the data elements using the AC card key.

6. The method as claimed in any one of the preceding claims, wherein the device identifier is or includes an application identifier which is capable of uniquely identifying the application (122) executing on the communication device (104).

7. The method as claimed in any one of the preceding claims, including transmitting (306) an association verification request requesting verification of an association between the communication device and the user, wherein the association verification request includes a set of data elements.

8. The method as claimed in any one of the preceding claims, wherein storing the device identifier includes combining the device identifier with the token and validating that the communication device is linked to a known mobile station international subscriber directory number (MSISDN).

9. The method as claimed in any one of the preceding claims, wherein the secure communication channel binds the token to the communication device and protects the token from interception and replay.

10. A system for verifying an association between a communication device and a user to enrol an application executing on the communication device by way of which application the user transacts against a user account maintained by an entity, the system including the communication device, a remote server (102) and a proximity communication enabled smart card, wherein the communication device interacts with the proximity communication enabled smart card via a proximity communication interface, and wherein the remote server is maintained on behalf of the entity and has access to an enrolment database (118), the system having a memory (454) for storing computer-readable program code and a processor (452) for executing the computer-readable program code, the system further comprising:
the application (122) installed on the communication device, wherein the application is provided by or on behalf of the entity;
a secure communication component (456) for establishing (208) a secure communication channel between the remote server and the communication device (104) with the communication device (104) uniquely identifiable by the remote server over the secure communication channel;
an identifier receiving component (460) for receiving (212), at the remote server from the communication device, a device identifier and a user identifier for association with each other, the user identifier having previously been associated with the user account;
an identifying component (462) for using the user identifier to identify (216) the user account associated therewith;
a token receiving component (468) for receiving a token at the remote server from the communication device (104) via the secure communication channel, wherein the token includes an application cryptogram obtained (218, 312) by the communication device (104), via the proximity communication interface, from the proximity communication enabled smart card of the user which generates the application cryptogram by signing a set of data elements received at the communication device from the remote server (102) using an application cryptogram (AC) card key stored within the proximity communication enabled smart card such that at least a portion of the token has been derived from the AC card key stored within the proximity communication enabled smart card, the AC card key having previously been associated with the user in a user account (114) and having been generated using an AC master key usable by an authorisation system associated with an issuer of the proximity communication enabled smart card to decrypt messages from the proximity communication enabled smart card;
a validating component (470) for validating the received token at the remote server, including verifying the legitimacy of the application cryptogram based on information known to the remote server;
a verification component (472) for, once determined that the token is valid, verifying the association between the communication device and the user and a storing component (464) for storing (232) at the remote server, the device identifier as a verified device identifier in association with one or both of the user identifier and the user account, including creating, by the remote server (102) in the enrolment database (118), a user record (120) associated with the user account (114);
wherein, once enrolled, the communication device (104) and application (122) installed thereon are usable to interact with the entity (112) remotely, via the communication network (106).

## Patentansprüche

1. Computerimplementiertes Verfahren zum Verifizieren einer Zuordnung zwischen einer Kommunikationsvorrichtung und einem Benutzer, um eine auf der Kommunikationsvorrichtung ausgeführte Anwendung, über die der Benutzer Transaktionen durchführt, einem von einer Entität geführten Benutzerkonto zuzuordnen, wobei das Verfahren in einem System durchgeführt wird, das die Kommunikationsvorrichtung, einen entfernten Server und eine für die Proximity-Kommunikation aktivierte Smartcard enthält, wobei die Kommunikationsvorrichtung mit der für die Proximity-Kommunikation aktivierten Smartcard über eine Schnittstelle für die Proximity-Kommunikation interagiert, und wobei der entfernte Server im Auftrag der Entität unterhalten wird und Zugriff auf eine Registrierungsdatenbank (118) hat, wobei das Verfahren Folgendes umfasst:
Installieren der Anwendung (122) auf der Kommunikationsvorrichtung, wobei die Anwendung von oder im Namen der Entität bereitgestellt wird;
Aufbauen (208) eines sicheren Kommunikationskanals zwischen dem entfernten Server und der Kommunikationsvorrichtung (104), wobei die Kommunikationsvorrichtung (104) durch den entfernten Server über den sicheren Kommunikationskanal eindeutig identifizierbar ist;
Empfangen (212), an dem entfernten Server von der Kommunikationsvorrichtung (104), einer Vorrichtungskennung und einer Benutzerkennung zur Zuordnung zueinander, wobei die Benutzerkennung zuvor dem Benutzerkonto zugeordnet worden ist;
Verwenden der Benutzerkennung, um das damit zugeordnete Benutzerkonto zu identifizieren (216);
Empfangen (224) eines Tokens an dem entfernten Server von der Kommunikationsvorrichtung (104) über den sicheren Kommunikationskanal (208), wobei der Token ein Anwendungskryptogramm enthält, das von der Kommunikationsvorrichtung (104) über die Schnittstelle für die Proximity-Kommunikation von der für die Proximity-Kommunikation aktivierten Smartcard des Benutzers erhalten wird (218), das das Anwendungskryptogramm durch Signieren eines Satzes von Datenelementen, die an der Kommunikationsvorrichtung von dem entfernten Server (102) empfangen werden, unter Verwendung eines Anwendungskryptogramm-(Application Cryptogram, AC) Kartenschlüssels, der in der für die Proximity-Kommunikation aktivierten Smartcard gespeichert ist, erzeugt, so dass mindestens ein Teil des Tokens von dem AC-Kartenschlüssel abgeleitet wurde, der in der für die Proximity-Kommunikation aktivierten Smartcard gespeichert ist, wobei der AC-Kartenschlüssel zuvor dem Benutzer in einem Benutzerkonto (114) zugeordnet worden ist und unter Verwendung eines AC-Hauptschlüssels erzeugt wurde, der von einem Autorisierungssystem verwendet werden kann, das einem Aussteller der für die Proximity-Kommunikation aktivierten Smartcard zugeordnet ist, um Nachrichten von der für die Proximity-Kommunikation aktivierten Smartcard zu entschlüsseln;
Validieren des empfangenen Tokens (226) an dem entfernten Server, einschließlich des Verifizierens der Legitimität des Anwendungskryptogramms basierend auf Informationen, die dem entfernten Server bekannt sind;
sobald bestimmt ist, dass der Token gültig ist, Verifizieren (230) der Zuordnung zwischen der Kommunikationsvorrichtung und dem Benutzer und Speichern (232), auf dem entfernten Server, der Vorrichtungskennung als verifizierte Vorrichtungskennung in Verbindung mit einer oder beiden der Benutzerkennung und dem Benutzerkonto, einschließlich des Erzeugens, durch den entfernten Server (102) in der Registrierungsdatenbank (118), eines Benutzerdatensatzes (120), der dem Benutzerkonto (114) zugeordnet ist;
wobei, sobald sie registriert sind, die Kommunikationsvorrichtung (104) und die darauf installierte Anwendung (122) dazu verwendet werden können, mit der Entität (112) aus der Ferne über das Kommunikationsnetzwerk (106) zu interagieren.

2. Verfahren nach Anspruch 1, wobei die für die Proximity-Kommunikation aktivierte Smartcard von der Entität für den persönlichen Gebrauch an den Benutzer ausgegeben wird, so dass der Benutzer (116) der für die Proximity-Kommunikation aktivierten Smartcard zugeordnet ist, wobei der AC-Kartenschlüssel für die Smartcard einzigartig ist, die für die Proximity-Kommunikation aktiviert ist, wobei eine Kontodatenbank (110) den AC-Hauptschlüssel speichert, der verwendet wurde, um den AC-Kartenschlüssel abzuleiten, und wobei die Legitimität des Anwendungskryptogramms durch die Entität überprüfbar ist.

3. Verfahren nach Anspruch 1 oder Anspruch 2, wobei das an der Kommunikationsvorrichtung durchgeführte Verfahren Folgendes enthält:
Erhalten des Tokens, einschließlich des Weiterleitens des Satzes von Datenelementen an die zur Proximity-Kommunikation befähigte Smartcard und Empfangen des Tokens von der zur Proximity-Kommunikation befähigten Smartcard.

4. Verfahren nach Anspruch 3, wobei die Datenelemente in einer Anweisung enthalten sind, die die zur Proximity-Kommunikation befähigte Smartcard auffordert, das Token für eine Transaktion zu erzeugen, wobei die Anweisung eine Kartenaktionsanalyse- (Card Action Analysis) Anweisung ist.

5. Verfahren nach Anspruch 3 oder 4, wobei das Verfahren, das an der für die Proximity-Kommunikation aktivierten Smartcard durchgeführt wird, Folgendes enthält:
Ableiten des mindestens einen Teils des Tokens durch Durchführen einer Operation an den Datenelementen unter Verwendung des AC-Kartenschlüssels, um den Token zu erzeugen, einschließlich Signieren oder Verschlüsseln der Datenelemente unter Verwendung des AC-Kartenschlüssels, und wobei der Token der resultierende Chiffriertext ist, der durch Signieren oder Verschlüsseln der Datenelemente unter Verwendung des AC-Kartenschlüssels erzeugt wird.

6. Verfahren nach einem der vorhergehenden Ansprüche, wobei die Vorrichtungskennung eine Anwendungskennung ist oder enthält, die in der Lage ist, die auf der Kommunikationsvorrichtung (104) ausgeführte Anwendung (122) eindeutig zu identifizieren.

7. Verfahren nach einem der vorhergehenden Ansprüche, das das Übertragen (306) einer Assoziationsverifizierungsanforderung enthält, die eine Verifizierung einer Assoziation zwischen der Kommunikationsvorrichtung und dem Benutzer anfordert, wobei die Assoziationsverifizierungsanforderung einen Satz von Datenelementen enthält.

8. Verfahren nach einem der vorhergehenden Ansprüche, wobei das Speichern der Vorrichtungskennung das Kombinieren der Vorrichtungskennung mit dem Token und das Validieren, dass die Kommunikationsvorrichtung mit einer bekannten internationalen Mobilstationsteilnehmerverzeichnisnummer (Mobile Station International Subscriber Directory Number, MSISDN) verbunden ist, enthält.

9. Verfahren nach einem der vorhergehenden Ansprüche, wobei der sichere Kommunikationskanal den Token an die Kommunikationsvorrichtung bindet und den Token vor Abfangen und Wiedergeben schützt.

10. System zum Verifizieren einer Zuordnung zwischen einer Kommunikationsvorrichtung und einem Benutzer, um eine auf der Kommunikationsvorrichtung ausgeführte Anwendung, über die der Benutzer Transaktionen durchführt, einem von einer Entität geführten Benutzerkonto zuzuordnen, wobei das System die Kommunikationsvorrichtung, einen entfernten Server (102) und eine für die Proximity-Kommunikation aktivierte Smartcard enthält, wobei die Kommunikationsvorrichtung mit der für die Proximity-Kommunikation aktivierten Smartcard über eine Schnittstelle für die Proximity-Kommunikation interagiert, und wobei der entfernte Server im Auftrag der Entität unterhalten wird und Zugriff auf eine Registrierungsdatenbank (118) hat, wobei das System einen Speicher (454) zum Speichern von computerlesbarem Programmcode und einen Prozessor (452) zum Ausführen des computerlesbaren Programmcodes aufweist, wobei das System ferner Folgendes umfasst:
die Anwendung (122), die auf der Kommunikationsvorrichtung installiert ist, wobei die Anwendung von oder im Namen der Entität bereitgestellt wird;
eine sichere Kommunikationskomponente (456) zum Aufbauen (208) eines sicheren Kommunikationskanals zwischen dem entfernten Server und der Kommunikationsvorrichtung (104), wobei die Kommunikationsvorrichtung (104) durch den entfernten Server über den sicheren Kommunikationskanal eindeutig identifizierbar ist;
eine Kennungsempfangskomponente (460) zum Empfangen (212) einer Vorrichtungskennung und einer Benutzerkennung an dem entfernten Server von der Kommunikationsvorrichtung zur Zuordnung zueinander, wobei die Benutzerkennung zuvor dem Benutzerkonto zugeordnet wurde;
eine Identifizierungskomponente (462) zum Verwenden der Benutzerkennung, um das damit zugeordnete Benutzerkonto zu identifizieren (216);
eine Token-Empfangskomponente (468) zum Empfangen eines Tokens an dem entfernten Server von der Kommunikationsvorrichtung (104) über den sicheren Kommunikationskanal, wobei der Token ein Anwendungskryptogramm enthält, das von der Kommunikationsvorrichtung (104) über die Schnittstelle für die Proximity-Kommunikation von der für die Proximity-Kommunikation aktivierten Smartcard des Benutzers erhalten wird (218, 312), das das Anwendungskryptogramm durch Signieren eines Satzes von Datenelementen, die an der Kommunikationsvorrichtung von dem entfernten Server (102) empfangen werden, unter Verwendung eines Anwendungskryptogramm- (AC) Kartenschlüssels, der in der für die Proximity-Kommunikation aktivierten Smartcard gespeichert ist, erzeugt, so dass mindestens ein Teil des Tokens von dem AC-Kartenschlüssel abgeleitet wurde, der in der für die Proximity-Kommunikation aktivierten Smartcard gespeichert ist, wobei der AC-Kartenschlüssel zuvor dem Benutzer in einem Benutzerkonto (114) zugeordnet worden ist und unter Verwendung eines AC-Hauptschlüssels erzeugt wurde, der von einem Autorisierungssystem verwendet werden kann, das einem Aussteller der für die Proximity-Kommunikation aktivierten Smartcard zugeordnet ist, um Nachrichten von der für die Proximity-Kommunikation aktivierten Smartcard zu entschlüsseln;
eine Validierungskomponente (470) zum Validieren des empfangenen Tokens an dem entfernten Server, einschließlich des Verifizierens der Legitimität des Anwendungskryptogramms basierend auf Informationen, die dem entfernten Server bekannt sind;
eine Verifizierungskomponente (472) zum, sobald bestimmt ist, dass der Token gültig ist, Verifizieren der Zuordnung zwischen der Kommunikationsvorrichtung und dem Benutzer und einer Speicherkomponente (464) zum Speichern (232), auf dem entfernten Server, der Vorrichtungskennung als verifizierte Vorrichtungskennung in Verbindung mit einer oder beiden der Benutzerkennung und dem Benutzerkonto, einschließlich des Erzeugens, durch den entfernten Server (102) in der Registrierungsdatenbank (118), eines Benutzerdatensatzes (120), der dem Benutzerkonto (114) zugeordnet ist;
wobei, sobald sie registriert sind, die Kommunikationsvorrichtung (104) und die darauf installierte Anwendung (122) dazu verwendet werden können, mit der Entität (112) aus der Ferne über das Kommunikationsnetzwerk (106) zu interagieren.

## Revendications

1. Procédé mis en œuvre par ordinateur servant à vérifier une association entre un dispositif de communication et un utilisateur dans le but d'inscrire une application qui s'exécute sur le dispositif de communication, application au moyen de laquelle l'utilisateur effectue des transactions avec un compte d'utilisateur maintenu par une entité, le procédé étant effectué dans un système comprenant le dispositif de communication, un serveur à distance et une carte à puce activée par la communication de proximité, dans lequel le dispositif de communication interagit avec la carte à puce activée par la communication de proximité par le biais d'une interface de communication de proximité, et dans lequel le serveur à distance est maintenu au nom de l'entité et a accès à une base de données d'inscription (118), le procédé comportant les étapes consistant à :
installer l'application (122) sur le dispositif de communication, dans lequel l'application est fournie par l'entité ou au nom de celle-ci ;
établir (208) un canal de communication sécurisé entre le serveur à distance et le dispositif de communication (104), le dispositif de communication (104) étant en mesure d'être identifié de manière unique par le serveur à distance sur le canal de communication sécurisé ;
recevoir (212), au niveau du serveur à distance en provenance du dispositif de communication (104), un identificateur de dispositif et un identificateur d'utilisateur destinés à des fins d'association l'un par rapport à l'autre, l'identificateur d'utilisateur ayant été précédemment associé au compte d'utilisateur ;
utiliser l'identificateur d'utilisateur pour identifier (216) le compte d'utilisateur associé à celui-ci ;
recevoir (224) un jeton au niveau du serveur à distance en provenance du dispositif de communication (104) par le biais du canal de communication sécurisé (208), dans lequel le jeton comprend un cryptogramme d'application obtenu (218) par le dispositif de communication (104), par le biais de l'interface de communication de proximité, en provenance de la carte à puce activée par la communication de proximité de l'utilisateur qui génère le cryptogramme d'application en signant un ensemble d'éléments de données reçus au niveau du dispositif de communication en provenance du serveur à distance (102) en utilisant une clé de carte à cryptogramme d'application (AC) stockée dans la carte à puce activée par la communication de proximité de telle sorte qu'au moins une partie du jeton a été dérivée de la clé de carte AC stockée dans la carte à puce activée par la communication de proximité, la clé de carte AC ayant été précédemment associée à l'utilisateur dans un compte d'utilisateur (114) et ayant été générée en utilisant une clé principale AC utilisable par un système d'autorisation associé à un émetteur de la carte à puce activée par la communication de proximité pour déchiffrer les messages provenant de la carte à puce activée par la communication de proximité ;
valider le jeton reçu (226) au niveau du serveur à distance, étape qui comprend l'étape consistant à vérifier la légitimité du cryptogramme d'application sur la base d'informations connues du serveur à distance ;
une fois qu'il a été déterminé que le jeton est valide, vérifier (230) l'association entre le dispositif de communication et l'utilisateur et stocker (232), au niveau du serveur à distance, l'identificateur de dispositif en tant qu'identificateur de dispositif vérifié en association avec l'un ou les deux parmi l'identificateur d'utilisateur et/ou le compte d'utilisateur, étape qui comprend l'étape consistant à créer, par le serveur à distance (102) dans la base de données d'inscription (118), un enregistrement d'utilisateur (120) associé au compte d'utilisateur (114) ;
dans lequel, une fois l'inscription faite, le dispositif de communication (104) et l'application (122) installée sur celui-ci peuvent être utilisés pour interagir avec l'entité (112) à distance, par le biais du réseau de communication (106).

2. Procédé selon la revendication 1, dans lequel la carte à puce activée par la communication de proximité est délivrée à l'utilisateur par l'entité pour un usage personnel de telle sorte que l'utilisateur (116) est associé à la carte à puce activée par la communication de proximité, dans lequel la clé de carte AC est unique à la carte à puce activée par la communication de proximité, dans lequel une base de données de comptes (110) stocke la clé principale AC qui a été utilisée pour dériver la clé de carte AC, et dans lequel la légitimité du cryptogramme d'application est en mesure d'être vérifiée par l'entité.

3. Procédé selon la revendication 1 ou la revendication 2, dans lequel le procédé effectué au niveau du dispositif de communication comprend l'étape consistant à :
obtenir le jeton, étape qui comprend les étapes consistant à transférer l'ensemble d'éléments de données au niveau de la carte à puce activée par la communication de proximité et à
recevoir le jeton en provenance de la carte à puce activée par la communication de proximité.

4. Procédé selon la revendication 3, dans lequel les éléments de données sont inclus dans une commande demandant à la carte à puce activée par la communication de proximité de générer le jeton pour une transaction, dans lequel la commande est une commande de fonction « Card Action Analysis » (analyse d'action de carte).

5. Procédé selon la revendication 3 ou la revendication 4, dans lequel le procédé effectué au niveau de la carte à puce activée par la communication de proximité comprend l'étape consistant à :
dériver ladite au moins une partie du jeton en effectuant une opération sur les éléments de données en utilisant la clé de carte AC pour générer le jeton, étape qui comprend l'étape consistant à signer ou à chiffrer les éléments de données en utilisant la clé de carte AC, et
dans lequel le jeton est le texte chiffré résultant produit par l'étape consistant à signer ou à chiffrer les éléments de données en utilisant la clé de carte AC.

6. Procédé selon l'une quelconque des revendications précédentes, dans lequel l'identificateur de dispositif est ou comprend un identificateur d'application qui est en mesure d'identifier de manière unique l'application (122) qui s'exécute sur le dispositif de communication (104).

7. Procédé selon l'une quelconque des revendications précédentes, comprenant l'étape consistant à transmettre (306) une demande de vérification d'association demandant la vérification d'une association entre le dispositif de communication et l'utilisateur, dans lequel la demande de vérification d'association comprend un ensemble d'éléments de données.

8. Procédé selon l'une quelconque des revendications précédentes, dans lequel l'étape consistant à stocker l'identificateur de dispositif comprend les étapes consistant à combiner l'identificateur de dispositif avec le jeton et à valider comme quoi le dispositif de communication est relié à un numéro d'appel d'abonné international de station mobile connu (MSISDN).

9. Procédé selon l'une quelconque des revendications précédentes, dans lequel le canal de communication sécurisé lie le jeton au dispositif de communication et protège le jeton contre toute interception et relecture.

10. Système servant à vérifier une association entre un dispositif de communication et un utilisateur dans le but d'inscrire une application qui s'exécute sur le dispositif de communication, application au moyen de laquelle l'utilisateur effectue des transactions avec un compte d'utilisateur maintenu par une entité, le système comprenant le dispositif de communication, un serveur à distance (102) et une carte à puce activée par la communication de proximité, dans lequel le dispositif de communication interagit avec la carte à puce activée par la communication de proximité par le biais d'une interface de communication de proximité, et dans lequel le serveur à distance est maintenu au nom de l'entité et a accès à une base de données d'inscription (118), le système ayant une mémoire (454) servant à stocker un code de programme lisible par ordinateur et un processeur (452) servant à exécuter le code de programme lisible par ordinateur, le système comprenant par ailleurs :
l'application (122) installée sur le dispositif de communication, dans lequel l'application est fournie par l'entité ou au nom de celle-ci ;
un composant de communication sécurisé (456) servant à établir (208) un canal de communication sécurisé entre le serveur à distance et le dispositif de communication (104), le dispositif de communication (104) étant en mesure d'être identifié de manière unique par le serveur à distance sur le canal de communication sécurisé ;
un composant de réception d'identificateur (460) servant à recevoir (212), au niveau du serveur à distance en provenance du dispositif de communication, un identificateur de dispositif et un identificateur d'utilisateur destinés à des fins d'association l'un par rapport à l'autre, l'identificateur d'utilisateur ayant été précédemment associé au compte d'utilisateur ;
un composant d'identification (462) servant à utiliser l'identificateur d'utilisateur pour identifier (216) le compte d'utilisateur associé à celui-ci ;
un composant de réception de jeton (468) servant à recevoir un jeton au niveau du serveur à distance en provenance du dispositif de communication (104) par le biais du canal de communication sécurisé, dans lequel le jeton comprend un cryptogramme d'application obtenu (218, 312) par le dispositif de communication (104), par le biais de l'interface de communication de proximité, en provenance de la carte à puce activée par la communication de proximité de l'utilisateur qui génère le cryptogramme d'application en signant un ensemble d'éléments de données reçus au niveau du dispositif de communication en provenance du serveur à distance (102) en utilisant une clé de carte à cryptogramme d'application (AC) stockée dans la carte à puce activée par la communication de proximité de telle sorte qu'au moins une partie du jeton a été dérivée de la clé de carte AC stockée dans la carte à puce activée par la communication de proximité, la clé de carte AC ayant été précédemment associée à l'utilisateur dans un compte d'utilisateur (114) et ayant été générée en utilisant une clé principale AC utilisable par un système d'autorisation associé à un émetteur de la carte à puce activée par la communication de proximité pour déchiffrer les messages provenant de la carte à puce activée par la communication de proximité ;
un composant de validation (470) servant à valider le jeton reçu au niveau du serveur à distance, étape qui comprend l'étape consistant à vérifier la légitimité du cryptogramme d'application sur la base d'informations connues du serveur à distance ;
un composant de vérification (472) servant, une fois qu'il a été déterminé que le jeton est valide, à vérifier l'association entre le dispositif de communication et l'utilisateur et un composant de stockage (464) servant à stocker (232) au niveau du serveur à distance, l'identificateur de dispositif en tant qu'identificateur de dispositif vérifié en association avec l'un ou les deux parmi l'identificateur d'utilisateur et/ou le compte d'utilisateur, étape qui comprend l'étape consistant à créer, par le serveur à distance (102) dans la base de données d'inscription (118), un enregistrement d'utilisateur (120) associé au compte d'utilisateur (114) ;
dans lequel, une fois l'inscription faite, le dispositif de communication (104) et l'application (122) installée sur celui-ci peuvent être utilisés pour interagir avec l'entité (112) à distance, par le biais du réseau de communication (106) .
